# EUROPÄISCHE PATENTSCHRIFT

(11) **EP 3 066 144 B1**
(45) Veröffentlichungstag und Bekanntmachung des Hinweises auf die Patenterteilung: **26.12.2018**
(21) Anmeldenummer: 14795824.3
(22) Anmeldetag: 07.11.2014
(51) Int. Cl.: C08G 18/80, C08J 9/12, C08J 9/14, C08G 18/28, C08G 18/38

(54) **POLYURETHANSCHAUM UND VERFAHREN ZU SEINER HERSTELLUNG**
POLYURETHANE FOAM AND METHOD FOR ITS PRODUCTION
MOUSSE DE POLYURÉTHANE ET SON PROCÉDÉ DE FABRICATION

(30) Priorität: 08.11.2013 EP 13192109
(43) Veröffentlichungstag der Anmeldung: 14.09.2016
(73) Patentinhaber: Covestro Deutschland AG, 51373 Leverkusen (DE)
(72) Erfinder: LINDNER, Stefan, 42857 Remscheid (DE); FRIEDERICHS, Wolfgang, 50933 Köln (DE); NIESTEN, Meike, 51063 Köln (DE); STREY, Reinhard, 41540 Dormagen (DE); SOTTMANN, Thomas, 70597 Stuttgart (DE); BECKER, Niels, 50937 Köln (DE); CHALBI, Agnes, 51109 Köln (DE); ENGELEN, Diana, 51379 Leverkusen (DE); HEINZ, Paul, 51063 Köln (DE)
(74) Vertreter: Levpat
(86) Internationale Anmeldenummer: PCT/EP2014/074038
(87) Internationale Veröffentlichungsnummer: WO 2015/067751

(56) Entgegenhaltungen:
- WO-A1-2011/054868
- WO-A2-2012/146568
- DE-A1-102011 050 014
- US-A- 3 672 955

## Beschreibung

Die vorliegende Erfindung betrifft einen Polyurethanschaum, der erhältlich ist aus der Reaktion einer Mischung umfassend A) eine gegenüber Isocyanaten reaktive Verbindung; B) ein Treibmittel ausgewählt aus der Gruppe umfassend lineare, verzweigte oder cyclische C₁- bis C₆-Kohlenwasserstoffe, lineare, verzweigte oder cyclische C₁- bis C₆-Fluorkohlenwasserstoffe, N₂, O₂, Argon und/oder CO₂, wobei das Treibmittel B) im überkritischen oder nahekritischen Zustand vorliegt; C) ein Polyisocyanat, D) ein amphiphiles Isocyanat und optional E) ein Tensid sowie optional F) weitere Hilfs- und Zusatzstoffe.

Die Erfindung betrifft weiterhin ein Verfahren zur Herstellung eines solchen Polyurethanschaums.

Im Sinne dieser Anmeldung sind mit der Bezeichnung "Polyurethanschaum" auch Polyharnstoff- und Polyisocyanuratschäume umfasst.

Nanozelluläre oder nanoporöse Polymerschaumstoffe sind aufgrund von theoretischen Betrachtungen besonders gute Materialien für die Wärmeisolation. Hierbei liegen die inneren Abmessungen der Schaumstrukturen im Bereich der mittleren freien Weglänge eines Gasmoleküls. Auf diese Weise kann der Anteil des Gases am Wärmetransport verringert werden. Eine häufig in der Wärmedämmung verwendete Polymergruppe sind Polyurethane.

Bei der Herstellung von Polyurethanschäumen wird eine Polyolkomponente, in welcher auch ein Treibmittel enthalten ist, mit einem Isocyanat zur Reaktion gebracht. Durch die Reaktion von Isocyanat mit Wasser entsteht Kohlendioxid, das auch als Treibmittel wirkt.

Der für die Schaumbildung und damit für die spätere Zellgröße des ausgehärteten Schaums entscheidende Schritt ist die Nukleierung von Treibmitteln, da jede Zelle im Schaum aus einer Gasblase entstanden ist. Hierbei ist zu beobachten, dass in der Regel nach der Nukleierung keine neuen Gasblasen entstehen, sondern Treibmittel in bereits bestehende Gasblasen hineindiffundiert.

Die Zugabe von Stabilisatoren unterstützt die Emulgierung der verschiedenen Komponenten, beeinflusst die Nukleierung und verhindert die Koaleszenz der wachsenden Gasblasen. Außerdem beeinflussen sie die Zellöffnung. Bei offenzelligen Schäumen werden die Membranen der wachsenden Poren geöffnet und die Stege der Poren bleiben bestehen.

Ein möglicher Ansatz ist es, ein überkritisches Treibmittel in der Reaktionsmischung zu emulgieren und dann nach einer Druckerniedrigung den Schaum auszuhärten. Als Variante davon ist das POSME-Verfahren (principle of supercritical micro emulsion expansion) bekannt. In diesem liegt das Treibmittel in Form einer Mikroemulsion vor. Mikroemulsionen bilden sich unter bestimmten Bedingungen, welche unter anderem von der Konzentration der Emulgatoren und der Temperatur abhängen. Mikroemulsionen zeichnen sich dadurch aus, dass sie stabil sind und dass die unpolare Phase, also hier das Treibmittel, in sehr kleinen Tröpfchen innerhalb der polaren Phase vorliegen kann. Die Durchmesser solcher Tröpfchen können in einem Bereich von 1 bis 100 Nanometern liegen.

DE 102 60 815 A1 offenbart aufgeschäumtes Material und ein Herstellverfahren für das aufgeschäumte Material. Aufgeschäumtes Material mit Schaumblasen in Nanogröße soll erzeugt werden, ohne dass die Energiebarriere, die üblicherweise bei Phasenumwandlungen und Keimbildungsprozessen auftritt, überwunden werden muss. Verbunden damit ist das Ziel, ein aufgeschäumtes Material kontrollierbar zu erzeugen, welches eine Anzahldichte von Schaumblasen zwischen 10¹² und 10¹⁸ pro cm³ sowie einen mittleren Durchmesser der Schaumblasen zwischen 10 nm und 10 µm hat. Grundlage ist die Dispersion eines zweiten Fluids in Form von Pools in einer Matrix eines ersten Fluids. In einem Reaktionsraum liegen das erste Fluid als Matrix und das zweite Fluid in Pools vor. Durch Druck- und/oder Temperaturänderung wird das zweite Fluid in einen nahe- oder überkritischen Zustand mit einer flüssigkeitsnahen Dichte überführt. Somit liegt das zweite Fluid vollständig oder nahezu vollständig in Pools vor, die im gesamten ersten Fluid gleichmäßig verteilt sind. Durch Druckentlastung kehrt das zweite Fluid in einen Zustand gasförmiger Dichte zurück, wobei die Pools zu Schaumblasen in Nanometer-Größe aufgebläht werden. Es muss keine Energiebarriere überwunden werden, noch müssen die Treibmittelmoleküle zu den wachsenden Blasen diffundieren.

Als erstes Fluid wird hier allgemein eine polymerisierbare Substanz vorgeschlagen. Ausdrücklich erwähnt werden jedoch nur Acrylamid, welches zu Polyacrylamid polymerisiert, und Melamin, welches zu Melamin-Harz polymerisiert. Das zweite Fluid sollte aus einer Stoffgruppe von Kohlenwasserstoffen wie Methan oder Ethan, weiterhin Alkanolen, Fluorchlorkohlenwasserstoffen oder CO₂ ausgewählt sein. Weiterhin wird ein amphiphiles Material eingesetzt, welches mindestens einen dem ersten Fluid zugeneigten Block und mindestens einem dem zweiten Fluid zugeneigten Block aufweisen sollte.

In der WO 2012/146568 wird ein Polyurethanschaum, erhältlich aus der Reaktion einer Mischung umfassend A) eine gegenüber Isocyanaten reaktive Verbindung; B) ein Treibmittel ausgewählt aus der Gruppe umfassend lineare, verzweigte oder cyclische C1- bis C6-Kohlenwasserstoffe, lineare, verzweigte oder cyclische C1- bis C6-Fluorkohlenwasserstoffe, N₂, O₂, Argon und/oder CO₂, wobei das Treibmittel B) im überkritischen oder nahekritischen Zustand vorliegt; und C) ein Polyisocyanat, offenbart.

Die gegenüber Isocyanaten reaktive Verbindung A) umfasst einen hydrophoben Teil und weist einen hydrophilen Teil und eine durchschnittliche Hydroxyl-Funktionalität von mehr als 1 auf. Der hydrophobe Teil umfasst eine gesättigte oder ungesättigte Kohlenwasserstoffkette mit mindestens 6 C-Atomen und der hydrophile Teil umfasst Alkylenoxideinheiten und/oder Estereinheiten.

Die vorliegende Erfindung stellt sich zur Aufgabe, nanozelluläre Polyurethanschäume zur Verfügung zu stellen, welche sich über einen zu dem in der WO 2012/146568 beschriebenen Verfahren alternativen Ansatz, bei dem das Treibmittel aber ebenfalls in einer Mikroemulsion stabilisiert ist, herstellen lassen.

Erfindungsgemäß wird diese Aufgabe gelöst durch einen Polyurethanschaum, erhältlich aus der Reaktion einer Mischung umfassend:
A) eine gegenüber Isocyanaten reaktive Verbindung ("NCO-reaktive Verbindung");
B) ein Treibmittel ausgewählt aus der Gruppe umfassend lineare, verzweigte oder cyclische C₁- bis C₆-Kohlenwasserstoffe, lineare, verzweigte oder cyclische C₁- bis C₆-Fluorkohlenwasserstoffe, N₂, O₂, Argon und/oder CO₂, wobei das Treibmittel B) im überkritischen oder nahekritischen Zustand vorliegt;
C) ein Polyisocyanat;
D) ein amphiphiles Isocyanat; und
E) gegebenenfalls ein Tensid und
F) gegebenenfalls weitere Hilfs- und Zusatzstoffe.

Es wurde überraschenderweise gefunden, dass sich durch die Verwendung eines amphiphilen Isocyanats D) auch zu Polyurethanschäumen weiterverarbeitbare Mikroemulsionen des Treibmittels, insbesondere von CO₂, herstellen lassen. Dadurch liegt das Treibmittel fein verteilt in einer eigenen Phase vor, wodurch sich besonders feinzellige Schäume herstellen lassen. Bei der Verwendung der Treibmittelmischung im überkritischen oder nahekritischen Zustand ist kein Nukleierungsschritt nötig. Daher ist die Herstellung feinzelliger Schäume möglich.

Die Komponente D), das amphiphile Isocyanat, ist eine Verbindung, welche aus einem polaren (hydrophilen) und einem unpolaren (hydrophoben / liphophilen) Teil besteht. Dadurch kann die Komponente D) einerseits als Tensid angesehen werden, andererseits aber auch als Reaktionspartner in der Polyurethanherstellung.

Tenside können durch den HLB-Wert (engl. Abk.: hydrophilic-lipophilic-balance) charakterisiert werden, welcher durch das Massenverhältnis des hydrophilen und lipophilen Anteils bestimmt wird. Der HLB-Wert für nichtionische Tenside kann folgendermaßen berechnet werden: HLB=20 x (1-Mh/M), wobei Mh die Molmassse des hydrophoben Anteils eines Moleküls ist und M die Molmasse des gesamten Molekuls. Der HLB Wert für ein amphiphiles Isocyanat kann beispielsweise 1 bis 18, bevorzugt 2 bis 17, besonders bevorzugt 3 bis 16 betragen.

Die amphiphilen Isocyanate D) können durch die Reaktion von Polyisocyanaten mit polaren oder unpolaren Verbindungen, die Zerewitinoff-aktive Wasserstoffatome tragen (z.B. OH, NH) und somit gegenüber Isocyanaten reaktiv sind, hergestellt werden. Im Folgenden werden Verbindungen aus dieser Klasse einzeln oder gemeinsam mit "OH-Komponente" bezeichnet.

Je nach Auswahl des Polyisocyanats und der OH-Komponente kann im amphiphilen Isocyanat die OH-Komponente den hydrophoben (lipophilen) oder hydrophilen Anteil darstellen.

Welcher Molekülteil im amphiphilen Isocyanat "hydrophil" bzw. "lipophob" ist, wird nicht durch absolute Polaritätswerte des entsprechenden Molekülteils bestimmt, sondern dadurch, welcher Molekülteil die höhere Affinität zu Substanzen höherer Polarität aufweist. Die Amphiphilie wird also bestimmt durch einen relativen Polaritätsunterschied der Molekülteile.

Beispielsweise bildet bei Einsatz einer OH-Komponente, welche ausgewählt wird aus einer oder mehreren Verbindungen aus der Gruppe enthaltend einwertige und mehrwertige Alkohole, Fettalkohole, Amine und Aminoalkohole, welche über eine gesättigte oder ungesättigte Kohlenwasserstoffkette mit mindestens 4 C-Atomen verfügen, die OH-Komponente den hydrophoben Anteil und das Polyisocyanat den hydrophilen Anteil im amphiphilen Isocyanat.

Beispielsweise bildet bei Einsatz von monofunktionellen oder mehrfunktionellen Polyalkylenoxiden mit einem hohen Anteil Ethylenoxid als OH-Komponente diese den hydrophilen Anteil und das Polyisocyanat den hydrophoben Anteil im amphiphilen Isocyanat.

Die Herstellung von dem amphiphilen Isocyanaten D) erfolgt typischerweise durch Umsetzung der gegenüber Isocyanaten reaktiven Gruppen der OH-Komponente mit den NCO-Gruppen des Polyisocyanat. Dabei werden das Polyisocyanat und die OH-Komponente z.B. über eine Urethangruppe oder eine Harnstoffgruppe miteinander verknüpft. Durch einen Überschuss an Isocyanatgruppen in der Reaktionsmischung wird erreicht, dass ein NCO-funktionelles, Urethan- und/oder Harnstoffgruppen enthaltendes, amphiphiles Isocyanat erhalten wird.

Das zur Herstellung der amphiphilen Isocyanate verwendete Polyisocyanat ist ein Isocyanat mit einer mittleren NCO-Funktionalität von ≥ 2.

Beispiele solcher geeigneter Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat eingesetzt werden.

Verbindungen, die sich als OH-Komponente einsetzen lassen, verfügen über Hydroxyl- und/oder aminische Funktionen.

Beispiele für solche Verbindungen sind einwertige oder mehrwertige Alkohole oder Fettalkohole, welche eine gesättigte oder ungesättigte Kohlenwasserstoffkette mit mindestens 4 C-Atomen aufweisen, z.B. die isomeren Verbindungen der Alkanole, wie z.B. Butanole, Hexanole, Octanole, Decanole, Tridecanole und Hexadecanole, sowie 2-Ethyl-1-hexanol, 12-Hydroxystearylalkohol, Oleylalkohol, Erucylalkohol, Linoleyalkohol, Linolenylalkohol, Arachidylalkohol, Gadoleylalkohol, Erucylalkohol und Brassidylalkohol.

Bevorzugt sind Butanole, insbesondere 1-Butanol, Hexanole, Octanole, insbesondere 2-Ethyl-1-hexanol, Decanole, Hexadecanole, 12-Hydroxystearylalkohol und Oleylalkohol,
Beispiele für mehrwertige Alkohole sind die isomeren Verbindungen der Alkandiole, z.B. die Butandiole, Pentandiole, Hexandiole, Heptandiole, Octandiole und die höhermolekularen α,ω-Alkandiole mit 9 bis 18 Kohlenstoffatomen, insbesondere 2-Methyl-1,3-propandiol, 2,2-Dimethyl-1,3-propandiol, 2-Butyl-2-ethyl-1,3-propandiol sowie mehrwertige Alkohole wie 1,2,6-Hexantriol, 1,1,1-Trimethylolpropan, 2,2-(Bis(hydroxymethyl)-1,3-propandiol, 1,2,4-Butantriol, 1,2,6-Hexantriol, Bis(trimethylolpropan), Pentaerythrit, Mannit, Methylglykosid, Dimerdiol (=Hydrierungsprodukt des Dimerfettsäuremethylesters) und Rizinusöl. Bevorzugt sind die Butandiole, Pentandiole, Hexandiole, Heptandiole und Octandiole, insbesondere 2-Methyl-1,3-propandiol, 2,2-Dimethyl-1,3-propandiol sowie 2-Butyl-2-ethyl-1,3-propandiol, und 1,2,6-Hexantriol, 1,1,1-Trimethylolpropan, 2,2-(Bis(hydroxymethyl)-1,3-propandiol, 1,2,4-Butantriol, 1,2,6-Hexantriol, Dimerdiol sowie Rizinusöl.

Weitere bevorzugte Alkohole sind monofunktionelle oder mehrfunktionelle Polyalkylenoxide mit einer OH-Zahl von 10 bis 600, bevorzugt von 20 bis 112, die einen Ethylenoxidanteil von 50 bis 100 mol% haben können, bevorzugt 60 bis 100 mol%, bezogen auf die Gesamtmenge der enthaltenen Oxyalkylengruppen, unter anderem z.B. Methoxy-Polyethylenoxid.

Für die amphiphilen Isocyanate geeignete Amine sind einwertige oder mehrwertige Amine, welche über mindestens 4 C-Atome verfügen. Beispiele sind primäre Monoamine, wie beispielsweise 1-Butylamin, 1-Hexylamin, 2- Ethylhexylamin, 1-Octylamin, 1-Decylamin, 1-Dodecylamin, 1-Octadecylamin; Aminoethyl)-pyridin und Polyetheramine (wie z. B. die Jeffamine® M-Serie, beispielsweise Jeffamine® M-600 oder Jeffamine® M-1000 der Huntsman Corp. und/oder Diamine mit primären und/oder sekundären Aminogruppen (wie z.B. 1,4-Diaminobutan, 1,2-Bis-(methylamino)-ethan, 1,3-Diaminopentan, 1,6-Diaminohexan, 1,8-Diaminooctan, 1,9-Diaminononan, 1,10-Diaminodecan, 1,12-Diaminododecan, Polyetherdiamine, wie z.B. solche der Jeffamine® D-Serie, beispielsweise Jeffamine® D-230, Jeffamine® D-400, Jeffamine® D-2000, Jeffamine® D-4000; aliphatische Triamine mit primären und/oder sekundären Aminogruppen, wie z.B. Triaminononan (4-Aminomethyl-1,8- octandiamin); Polyetheramine, wie z.B. solche der Jeffamine® T-Serie, beispielsweise Jeffamine® T -403, Jeffamine® T-3000, Jeffamine® T-5000).

Für die Herstellung der amphiphilen Isocyanate lassen sich auch Aminoalkohole einsetzen. Bevorzugt sind Amino-1-Butanol; 4-Amino-1-Butanol und Bis-(2-hydroxypropyl)-amin.

Als OH-Komponente eingesetzt werden können auch Mischungen der oben genannten Verbindungen und Verbindungsklassen.

Der Anteil des amphiphilen Isocyanats in der gesamten Reaktionsmischung umfassend die Komponenten A - F) kann 5 bis 70 Gew.-% betragen, bevorzugt 7 bis 60 Gew.-% und besonders bevorzugt 8,5 bis 50 Gew.-%.

Das Verhältnis zwischen den Isocyanatgruppen in der Polyisocyanatkomponente und den gegenüber Isocyanaten reaktiven Gruppen in der OH-Komponente beträgt für die Herstellung der amphiphilen Isocyanate 1:0,001 bis 1:0,8, bevorzugt 1:0,05 bis 1:0,6 und besonders bevorzugt 1:0,08 bis 1:0,5.

Die Umsetzung der Polyisocyanate mit der OH-Komponente zum amphiphilen Isocyanat kann in Gegenwart von Urethanisierungskatalysatoren wie Zinnverbindungen, Zinkverbindungen, Aminen, Guanidinen oder Amidinen, oder in Gegenwart von Allophanatisierungskatalysatoren wie Zinkverbindungen erfolgen. Die Umsetzung erfolgt typischerweise bei 25 bis 140 °C, bevorzugt 60 bis 100 °C.

Als NCO-reaktive Verbindungen A) können insbesondere Polyole, Polyamine, Polyaminoalkohole und Polythiole zum Einsatz kommen.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, a, a, a', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylmethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerythritoltetrakisthioglycolat, Pentaerythritoltetrakis(3 -mercaptopropionat) und 1,2-Bis((2-mercaptoethyl)thio)-3 -mercaptopropan.

In bevorzugter Ausgestaltung des erfindungsgemäßen Reaktionssystems weist die Verbindung A) eine Funktionalität gegenüber Isocyanaten von 1,8 bis 6,0 auf, insbesondere von ≥ 2,0, auf.

Die Polyole können beispielsweise ein zahlenmittleres Molekulargewicht Mn von ≥ 62 g/mol bis ≤ 8000 g/mol, bevorzugt von ≥ 90 g/mol bis ≤ 5000 g/mol und mehr bevorzugt von ≥ 92 g/mol bis ≤ 1000 g/mol aufweisen. Die OH-Zahl der Komponente A) gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der genannten Polyole ist zum Beispiel ≥ 2, beispielsweise in einem Bereich von ≥ 2 bis ≤ 6, vorzugsweise von ≥ 2,1 bis ≤ 4 und mehr bevorzugt von ≥ 2,2 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(l,3), Butandiol(l,4), Hexandiol(l,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle sind zum Beispiel Diole mit zahlenmittleren Molekulargewichten Mn von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1, 5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

In einer weiteren Ausführungsform umfasst die gegenüber Isocyanaten reaktive Komponente A) ein Polyetheresterpolyol mit einer Hydroxylzahl von ≥ 200 mg KOH/g bis ≤ 600 mg KOH/g und ein kurzkettiges Polyol mit einer Hydroxylzahl von ≥ 800 mg KOH/g. Geeignete Polyetheresterpolyole sind unter anderem bifunktionelle Polyetheresterpolyole, welche durch Addition von Alkylenoxiden und insbesondere Ethylenoxid an eine Mischung aus Phthalsäureanhydrid, Diethylenglycol und Ethylendiamin erhalten werden und eine OH-Zahl von ≥ 275 mg KOH/g bis ≤ 325 mg KOH/g aufweisen. Solche Produkte mit dem Handelsnamen Desmophen® VP.PU 1431 sind von der Firma Bayer MaterialScience AG erhältlich. Die OH-Zahl des Polyesterpolyols kann auch ≥ 290 mg KOH/g bis ≤ 320 mg KOH/g betragen. Kurzkettige Polyole sind insbesondere Polyole mit ≥ 2 bis ≤ 6 C-Atomen. Bevorzugt ist Glycerin. Dieses hat eine OH-Zahl von 1827 mg KOH/g. Durch die Zugabe des kurzkettigen Polyols lässt sich die Polarität der Polyolphase günstig erhöhen.

In einer Ausführungsform besteht die Komponente A) ganz oder teilweise aus gegenüber Isocyanaten reaktive Verbindungen A2), welche ebenfalls einen hydrophoben Teil und einen hydrophilen Teil umfassen und eine durchschnittliche Hydroxyl-Funktionalität von mehr als 1 aufweisen. Diese Verbindungen A2) können ebenfalls eine Tensidfunktion übernehmen. Der hydrophobe Teil der Verbindungen A2) umfasst eine gesättigte oder ungesättigte Kohlenwasserstoffkette mit mindestens 6 C-Atomen umfasst, und wobei der hydrophile Teil Alkylenoxideinheiten und/oder Estereinheiten umfasst. Beispiele der Verbindungen A2) werden in der WO 2012/146568 beschrieben.

Beispiele für Verbindungen A2) sind alkoxylierte Alkanole, alkoxylierte Alkylphenole, alkoxylierte Fettsäuren, Fettsäureester die mit Diolen oder Triolen verestert sind.

Die Verbindungen A2) verfügen über einen HLB-Wert zwischen 4 und 18, bevorzugt zwischen 8 und 16, und besonders bevorzugt zwischen 10 und 15. Der hydrophobe Teil umfasst eine gesättigte oder ungesättigte Kohlenwasserstoffkette mit mindestens 6 C-Atomen, vorzugsweise mindestens 8 C-Atomen, bevorzugt mindestens 12 C-Atomen und besonders bevorzugt mindestens 14 C-Atomen.

Gesättigte Kohlenwasserstoffketten der gegenüber Isocyanaten reaktiven Verbindung A2) lassen sich beispielsweise durch Veresterung von Polyolen mit gesättigten Fettsäuren erhalten. Ein Beispiel für eine geeignete gesättigte Fettsäure ist 2-Ethylhexansäure. Ungesättigte Kohlenwasserstoffketten können neben Einheiten der Form -(H)C=C(H)- selbstverständlich auch gesättigte Einheiten -CH2- enthalten. Dieses lässt sich durch Veresterung mit ungesättigten Fettsäuren erreichen. Ein Beispiel für eine geeignete ungesättigte Fettsäure ist Ölsäure ((Z)-9-Octadecensäure). Es können auch Mischungen aus Fettsäuren, die aus natürlichen Ölen wie beispielsweise Sojaöl oder Rapsöl erhalten werden, eingesetzt werden.

Die gegenüber Isocyanaten reaktive Verbindung A2) ist vorzugsweise eine bei 20 °C flüssige Verbindung, bevorzugt mit einer Viskosität von kleiner als 15000 mPas, besonders bevorzugt kleiner 5000 mPas. Die Viskosität kann beispielsweise nach DIN 53019 bestimmt werden.

Der hydrophile Bereich der gegenüber Isocyanaten reaktiven Verbindung A2) umfasst vorzugsweise Ethylenoxideinheiten -[-CH2-CH2-O-]- und/oder Carbonsäureestereinheiten. Die Verbindung A2) lässt sich beispielsweise durch partielle Alkoxylierung eines mindestens trifunktionellen Polyols erhalten, so dass eine OH-Gruppe des Polyols für eine Veresterung mit einer Fettsäure zur Verfügung steht. Die Verbindung A2) lässt weiterhin beispielsweise durch eine Veresterung von Ölsäure mit Adipinsäure, Trimethylolpropan und/oder Diethylenglykol erhalten. Vorzugsweise hat die gegenüber Isocyanaten reaktive Verbindung A2) eine mittlere Anzahl von OH-Gruppen je Molekül von 1,5 bis 5, besonders bevorzugt 1,8 bis 3,5 und 2,5 bis 3,5.

In einer weiteren Ausführungsform weist die gegenüber Isocyanaten reaktive Verbindung A2) eine Hydroxylzahl von ≥ 50 mg KOH/g bis ≤ 500 mg KOH/g auf. Dieser Wert kann anhand von DIN 53240 bestimmt werden. Bevorzugte Bereiche für die OH-Zahlen sind ≥ 70 mg KOH/g bis ≤ 400 mg KOH/g und besonders bevorzugt ≥ 50 mg KOH/g bis ≤ 100 mg KOH/g sowie ≥ 100 mg KOH/g bis ≤ 300 mg KOH/g. Im Falle von Mischungen ist hierunter die mittlere OH-Zahl zu verstehen.

Diese Ausführungsformen können beliebig miteinander kombiniert werden. Bevorzugt ist unter anderem eine Isocyanat-reaktive Verbindung A2) mit einer Hydroxylzahl von ≥ 50 mg KOH/g bis ≤ 100 mg KOH/g und einer mittleren Anzahl von OH-Gruppen je Molekül von 1,8 bis 3,5.

In einer weiteren Ausführungsform beträgt der Anteil der gegenüber Isocyanaten reaktiven Verbindung A2) ≥ 0,5 Gewichts-% bis ≤ 40 Gewichts-%, bezogen auf das Gesamtgewicht der Mischung. Vorzugsweise beträgt der Anteil ≥ 2 Gewichts-% bis ≤ 30 Gewichts-% und mehr bevorzugt ≥ 5 Gewichts-% bis ≤ 20 Gewichts-%.

In einer weiteren Ausführungsform umfasst der hydrophile Teil der gegenüber Isocyanaten reaktiven Verbindung A2) eine eingeesterte Fettsäure und der Anteil der eingeesterten Fettsäure beträgt ≥ 0,5 Gewichts-% bis ≤ 25 Gewichts-%, bezogen auf das Gesamtgewicht der Mischung. Bevorzugte Anteile sind ≥ 2 Gewichts-% bis ≤ 15 Gewichts-%, besonders bevorzugt sind ≥ 4 Gewichts-% bis ≤ 10 Gewichts-%.

In einer weiteren Ausführungsform ist die gegenüber Isocyanaten reaktive Verbindung A2) aus der Reaktion eines partiell alkoxylierten Polyols mit einer Fettsäure erhältlich.

Vorzugsweise umfasst die gegenüber Isocyanaten reaktive Verbindung A2) einen Carbonsäureester eines alkoxylierten Sorbitans.

Es ist weiterhin bevorzugt, dass die gegenüber Isocyanaten reaktive Verbindung A2) ein Ester der allgemeinen Formel (I) ist: 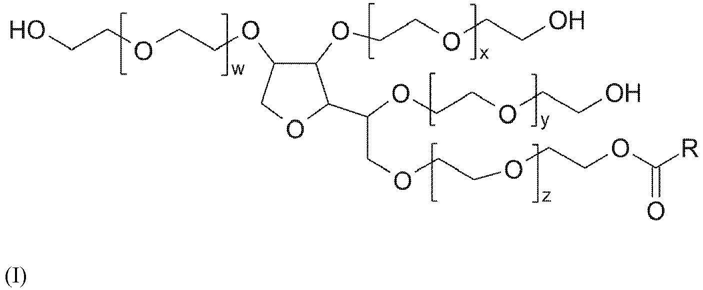 mit w+x+y+z ≥ 16 bis ≤ 22 und wobei R ein gesättigter oder ungesättigter Kohlenwasserstoffrest mit ≥ 12 bis ≤ 18 Kohlenstoffatomen ist.

Ein besonders bevorzugtes Beispiel ist Polysorbat 80, welches durch die Formel (II) beschrieben wird: 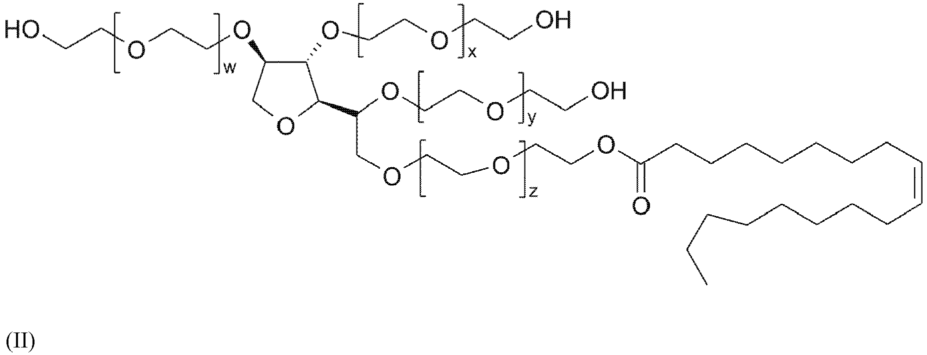 mit w+x+y+z = 20.

In einer Ausführungsform enthält die Mischung zusätzlich eine weitere Tensidkomponente E).

Geeignete Tenside E) unterliegen zunächst hinsichtlich ihrer Auswahl keinen Beschränkungen. Günstigerweise erlauben es die Tenside dem Treibmittel, in der gegenüber Isocyanaten reaktiven Phase Emulsionen oder Mikroemulsionen zu bilden. Besonders geeignete Tenside sind beispielsweise alkoxylierte Alkanole wie Ether von linearen oder verzweigten Alkanolen mit ≥ 6 bis ≤ 30 Kohlenstoffatomen mit Polyalkylenglykolen mit ≥ 5 bis ≤ 100 Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside wie Polysiloxan-Polyoxyalkylen-Copolymere und/oder Bis(2-ethyl-1-hexyl)sulfosuccinat. Beispiele für solche Tenside sind Alkylsulfate oder Bis(2-ethyl-1-hexyl)sulfosuccinat. Die Tensidkomponente E) ist vorzugsweise eine bei 20 °C flüssige Verbindung, bevorzugt mit einer Viskosität von kleiner als 15000 mPas, besonders bevorzugt kleiner 5000 mPas. Die Viskosität kann beispielsweise nach DIN 53019 bestimmt werden.

Die Tensidkomponente E) kann beispielsweise ein zahlenmittleres Molekulargewicht Mn von ≥ 100 g/mol bis ≤ 8000 g/mol, bevorzugt von ≥ 200 g/mol bis ≤ 5000 g/mol und mehr bevorzugt von ≥ 500 g/mol bis ≤ 2500 g/mol aufweisen.

In einer Ausführungsform umfasst der hydrophobe Teil der Tensidkomponente E) eine gesättigte oder ungesättigte Kohlenwasserstoffkette mit mindestens 4 C-Atomen, vorzugsweise mindestens 6 C-Atomen, bevorzugt mindestens 12 C-Atomen und besonders bevorzugt mindestens 14 C-Atomen. Gesättigte oder ungesättigte Kohlenwasserstoffketten der Tensidkomponente B) lassen sich beispielsweise durch die Alkoxylierung von Fettäurealkoholen oder Fettsäuren mit Ethylenoxid oder Propylenoxid herstellen.

In der Herstellung des Polyurethanschaums wird überkritisches oder nahekritisches Treibmittel B) verwendet. Im Rahmen der vorliegenden Erfindung liegen nahekritische Bedingungen dann vor, wenn die folgende Bedingung erfüllt ist: (T_{c} - T)/T ≤ 0,4 und/oder (p_{c} - p)/p ≤ 0,4. Hierbei bedeuten T die im Verfahren herrschende Temperatur, T_{c} die kritische Temperatur des Treibmittels oder Treibmittelgemisches, p der im Verfahren herrschende Druck und p_{c} der kritische Druck für das Treibmittel oder Treibmittelgemisch. Vorzugsweise liegen nahekritische Bedingungen vor, wenn gilt: (T_{c} - T)/T ≤ 0,3 und/oder (p_{c} - p)/p ≤ 0,3 und besonders bevorzugt (T_{c} - T)/T ≤ 0,2 und/oder (p_{c} - p)/p ≤ 0,2. Ohne auf eine Theorie festgelegt zu sein, wird angenommen, dass durch die Wahl von geeigneten Tensidkomponenten sich Emulsionen oder Mikroemulsionen des überkritischen oder nahekritischen Treibmittels in der Phase mit gegenüber Isocyanaten reaktiven Komponenten bilden.

Das Treibmittel kann vorzugsweise eine eigene Phase in der Reaktionsmischung bilden. Es kann beispielsweise überkritisches Kohlendioxid verwendet werden. Es ist möglich, dass das Kohlendioxid während der Reaktion zum Polyurethanschaum gebildet wird, beispielsweise durch die Reaktion von Isocyanaten mit Wasser oder mit Säuren. Beispiele für weitere Treibmittel sind lineare C₁-C₆-Kohlenwasserstoffe, verzweigte C₄-C₆-Kohlenwasserstoffe und cyclische C₃-C₆-Kohlenwasserstoffe. Spezielle Beispiele für Treibmittel sind Methan, Ethan, Propan, n-Butan, iso-Butan, n-Pentan, iso-Pentan, Cyclopentan, iso-Hexan, und/oder Cyclohexan. Weitere Beispiele sind die teil- oder perfluorierten Derivate von Methan, Ethan, Propan, n-Butan, iso-Butan, n-Pentan, iso-Pentan, Cyclopentan, Hexan, iso-Hexan, 2,3-Dimethylbutan und/oder Cyclohexan. Vorzugsweise wird Kohlendioxid oder eine Treibmittelmischung mit mehr als 30 Gewichts-%, bevorzugt mehr als 50 Gewichts-% und besonders bevorzugt mehr als 70 Gewichts-% Kohlendioxid verwendet.

Der Anteil des Treibmittels in der Reaktionsmischung umfassend alle Isocyanat-reaktiven Komponenten kann beispielsweise ≥ 5 Gewichts-% bis ≤ 60 Gewichts-%, bezogen auf die Isocyanat-reaktive Komponenten, betragen. Der Anteil des Treibmittels in der Reaktionsmischung umfassend Komponenten A), B), C), D), E) und F) kann beispielsweise ≥ 3 Gewichts-% bis ≤ 60 Gewichts-%, bevorzugt ≥ 4 Gewichts-% bis ≤ 40 Gewichts-% und besonders bevorzugt ≥ 5 Gewichts-% bis ≤ 30 Gewichts-% betragen.

Die Komponente C) ist ein Polyisocyanat, also ein Isocyanat mit einer NCO-Funktionalität von ≥ 2. Folglich liegt nun ein Reaktionsgemisch vor, welches zu Polyurethan-, Polyhamstoff- oder aber auch Polyisocyanuratschäumen reagieren kann.

Dieses Reaktionsgemisch kann beispielsweise direkt in einem Mischkopf erzeugt werden.

Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Selbstverständlich können in der Herstellung des Polyurethanschaums noch weitere übliche Hilfs- und Zusatzstoffe F) wie Katalysatoren, Flammschutzmittel, Trennmittel, Füllstoffe und dergleichen eingesetzt werden.

Die Komponenten A), B), C), D) und gegebenenfalls E) sowie gegebenenfalls F) liegen bevorzugt in folgenden Mengen vor:
A) 0-60 Gew.%, insbesondere 10 bis 60 Gew.-%, bevorzugt 15 bis 50 Gew.-%
B) 2 bis 40 Gew.-%, bevorzugt 4 bis 15 Gew.-%
   Die Summe der Anteile von C + D) 20 bis 70 Gew.-%, bevorzugt von 30 bis 60 Gew.-%, wobei das Verhältnis der Gewichtsprozente von C) : D) 0:100 bis 90:10, bevorzugt 1:99 bis 75:25 ist
E) 0 bis 20 Gew.-%, bevorzugt 1 bis 20 Gew.-%, besonders bevorzugt 1 bis 15 Gew.-%
F) 0 bis 10 Gew.-%, bevorzugt 0,001 bis 10 Gew.-%

Gewichtsprozente ("Gew.-%") beziehen sich jeweils auf die Zusammensetzung der gesamten Reaktionsmischung, falls nicht anders angegeben. Die Summe aller Gewichtsprozente in der Gesamtzusammensetzung ergibt 100 Gew.-%.

Für den Fall, dass der Anteil der Komponente A von 0 verschieden ist, können die Anzahl der NCO-Gruppen in der Polyisocyanatkomponente C) sowie in dem amphiphilen Isocyanat D) und die Anzahl der gegenüber Isocyanaten reaktiven Gruppen der Komponente A) beispielsweise in einem Zahlenverhältnis von ≥ 50:100 bis ≤ 500:100 zueinander stehen. Diese Kenngröße kann auch in einem Bereich von ≥ 160:100 bis ≤ 330:100 oder aber auch von ≥ 80:100 bis ≤ 140:100 liegen.

Erfindungsgemäß wird das Treibmittel B) mit dem amphiphilen Isocyanat D) gemischt, wobei das Treibmittel in einen überkritischen oder nahekritischen Zustand versetzt wird. Die Komponente B) kann auch in einer Mischung aus den Komponenten C) und D) vorgelegt werden.

Die Komponente B) wird ganz oder teilweise in dem amphiphilen Isocyanat D) oder in einer Mischung der Isocyanatkomponenten C) und D) emulgiert. Ein Teil der Komponente B) kann auch in der NCO-reaktiven Verbindung A) enthaltend eine Komponente A2) emulgiert werden.

Das Polyurethansystem umfassend die Komponenten A), B) C), D) und optional E) sowie optional F) kann dann beispielsweise erhalten werden, indem die Komponente A) und gegebenenfalls weitere Komponenten mit Ausnahme der Isocyanat-Komponenten C) und D) beispielsweise in einem Hochdruck-Mischkopf mit dem amphiphilen Isocyanat und dem Polyisocyanat versetzt werden, wobei mindestens das amphiphile Isocyanat D) bzw. die Mischung aus amphiphilen Isocyanat D) und Polyisocyanat C) das Treibmittel in einem für das Treibmittel überkritischen oder nahekritischen Zustand enthalten und im Mischkopf für das Treibmittel überkritische oder nahekritische Bedingungen bestehen.

In einer Ausführungsform kann die Komponente A), gegebenenfalls enthaltend weitere Komponenten, ebenfalls ein Treibmittel in einem überkritischen oder nahekritischen Zustand enthalten. Dies ist möglich, wenn die Komponente A) NCO-reaktive Verbindungen A2) enthält, welche Tensidfunktion übernehmen können, oder wenn zusätzlich eine Komponente E) anwesend ist.

Geeignete Drücke für die Herstellung des Polyurethanschaums können beispielsweise im Bereich von ≥ 40 bar bis ≤ 300 bar liegen. Geeignete Temperaturen sind beispielsweise ≥ 10 °C bis ≤ 110 °C und vorzugsweise ≥ 25 °C bis ≤ 80 °C. Insbesondere bevorzugt sind Drücke und Temperaturen oberhalb des kritischen Punktes von CO₂, also ≥ 73,7 bar und ≥ 31 °C.

In einer weiteren Ausführungsform umfasst die Polyisocyanatkomponente C) monomeres und/oder polymeres Diphenylmethan-4,4'-diisocyanat. Solch ein Polyisocyanat ist zum Beispiel unter dem Handelsnamen Desmodur ® 44V70L als ein Gemisch von Diphenylmethan-4,4'-diisocyanat (MDI) mit Isomeren und höherfunktionellen Homologen von der Firma Bayer MaterialScience erhältlich.

In einer weiteren Ausführungsform weist der Polyurethanschaum eine Rohdichte von ≥ 20 kg/m³ bis ≤ 160 kg/m³ auf. Die Rohdichte kann gemäß DIN EN 1602 bestimmt werden und beträgt vorzugsweise ≥ 30 kg/m³ bis ≤ 120 kg/m³ und mehr bevorzugt von ≥ 30 kg/m³ bis ≤ 80 kg/m³ aufweisen. Bevorzugte Verwendungen für den erfindungsgemäßen Schaum liegen in der Wärmeisolierung, beispielsweise für die Herstellung von Dämmplatten, Metallverbundpaneelen oder für Kühlschrankisolierungen.

Ein weiterer Gegenstand der vorliegenden Erfindung ist ein Verfahren zur Herstellung eines Polyurethanschaums, umfassend die Schritte:
- Einbringen der Mischung umfassend die Komponenten A), B), C), D) und optional E) sowie optional F) in eine geschlossene Form, wobei die geschlossene Form so eingerichtet ist, dass deren inneres Volumen und/oder der in ihrem Inneren herrschende Druck nach dem Einbringen der Mischung durch externe Beeinflussung verändert werden kann;
- Verweilen der Mischung umfassend die Komponenten A), B) C), D), und optional E) sowie optional F) in der geschlossenen Form für eine vorbestimmte Zeitdauer von ≥ 0 Sekunden; und
- Vergrößern des inneren Volumens der geschlossenen Form und/oder Verringern des im Inneren der geschlossenen Form herrschenden Drucks durch externe Beeinflussung.

Eine Ausführungsform des erfindungsgemäßen Verfahrens besteht aus den Schritten
- Bereitstellung einer Mischung der Verbindungen A), B), C), D), und optional E) sowie optional F) unter erhöhtem Druck, z.B. in einem Mischkopf; und
- Austragen der Mischung aus beispielsweise dem Mischkopf, wobei beim Austragen der in der Mischung herrschende Druck auf Atmosphärendruck erniedrigt wird.

Beim Austragen der Mischung aus dem Mischkopf wird der in der Mischung herrschende Druck auf Atmosphärendruck erniedrigt. Unter Atmosphärendruck ist hierbei insbesondere ein Druck von ≥ 0,9 bar bis ≤ 1,1 bar zu verstehen. Hierbei geht das Treibmittel in den unterkritischen und vorzugsweise in den gasförmigen Zustand über. Beispielsweise kann das Reaktionsgemisch aus dem Mischkopf einfach in eine offene Form eingebracht werden oder kontinuierlich für die Herstellung von Platten, wie zum Beispiel durch Freischaumanlagen oder Doppeltransportanlagen, genutzt werden. Es ist erfindungsgemäß ausdrücklich mit eingeschlossen, dass zwischen dem Verlassen der Reaktionsgemisches aus dem Mischkopf und dem Entspannen auf Atmosphärendruck noch Zwischenstationen vorgesehen sind, in denen ein Druck herrscht, der zwischen dem Druck im Mischkopf und dem Atmosphärendruck liegt.

In einer Ausführungsform des erfindungsgemäßen Verfahrens herrscht nach dem Bereitstellen der Mischung der Verbindungen A), B), C), D) und optional E sowie optional F) ein Druck von ≥ 40 bar bis ≤ 200 bar, vorzugsweise ein Druck von ≥ 60 bar bis ≤ 150 bar, besonders bevorzugt ein Druck von ≥ 70 bar bis ≤ 120 bar. Dieser Zustand kann insbesondere in einem Mischkopf und nach einem Mischkopf herrschen. Der Druck kann auch ≥ 80 bar bis ≤ 120 bar betragen. Bei solchen Drücken können überkritische oder nahekritische Bedingungen für das eingesetzte Treibmittel aufrecht erhalten werden.

In einer weiteren Ausführungsform des erfindungsgemäßen Verfahrens sind in dem Mischkopf oder stromabwärts vom Mischkopf Mittel angeordnet, um den Strömungswiderstand beim Austragen der Mischung umfassend die Komponenten A), B), C) und D) und optional E sowie optional F) zu erhöhen. Solche Mittel können beispielsweise in Strömungsrichtung gesehen nach einer Mischkammer des Mischkopfs angeordnete Lochblenden, Gitter, Spaltgitter und/oder Siebe sein. Durch die Erhöhung des Strömungswiderstandes kann gezielt der Druck beeinflusst werden, den die Reaktionsmischung vor dem Austragen aus dem Mischkopf aufweist. Der so eingestellte Druck kann niedriger sein als der Druck beim Mischen der Komponenten der Reaktionsmischung. Auf diese Weise kann auf die Bildung und Expansion von Treibmitteltröpfchen oder Treibmittelbläschen Einfluss genommen werden. Solche Mittel werden beispielsweise in WO 2001/98389 A1 beschrieben.

Die oben geschilderten Ausführungsformen sollen die Erfindung beschreiben, ohne auf diese beschränkt zu sein. Die Ausführungsformen können beliebig kombiniert werden, sofern sich aus dem Kontext nicht das Gegenteil ergibt.

### Glossar:

Desmodur® PU1806: Gemisch aus Diphenylmethan-2,4'-diisocyanat und Diphenylmethan-4,4'-diisocyanat (MDI) der Firma Bayer Materialscience AG.
Isophthaloylchlorid, CAS Nr. 99-63-8, erhältlich von Fluka
Methoxy-Polyethylenglykol 350, CAS Nr. 9004-74-4, erhältlich von Fluka
Ethylhexanol, CAS Nr. 104-76-7, erhältlich von Fluka

### Herstellung der amphiphilen Polyisocyanate

### Beispiel 1

412,5 g Desmodur® PU1806 und 1,1 g Isophthaloylchlorid wurden vorgelegt und auf 40°C aufgeheizt. 137,5 g Methoxy-Polyethyleneglykol 350 wurden innerhalb von 20 Minuten tropfenweise und unter Rühren zugegeben. Anschließend wurde die Temperatur auf 80°C erhöht und 2 Stunden nachgerührt. Es wurden 551,2 g eines amphiphilen Polyisocyanats erhalten (NCO-Gehalt 22,05 %).

### Beispiel 2

355,6 g Desmodur® PU1806 und 1,1 g Isophthaloylchlorid wurden vorgelegt und auf 40°C aufgeheizt. 192,5 g Methoxy-Polyethyleneglykol 350 wurden innerhalb von 20 Minuten tropfenweise und unter Rühren zugegeben. Anschließend wurde die Temperatur auf 80°C erhöht und 2 Stunden nachgerührt. Es wurden 552,10 g eines amphiphilen Polyisocyanats erhalten (NCO-Gehalt 17,18 %).

### Beispiel 3

223,95 g Desmodur® PU1806 und 1,19 g Isophthaloylchlorid wurden vorgelegt und auf 40°C aufgeheizt. 74,85 g Ethylhexanol wurden innerhalb von 20 Minuten tropfenweise und unter Rühren zugegeben. Anschließend wurde die Temperatur auf 80°C erhöht und 2 Stunden nachgerührt. Es wurden 300 g eines amphiphilen Polyisocyanats erhalten (NCO-Gehalt 16,74 %).

### Beispiele 4:

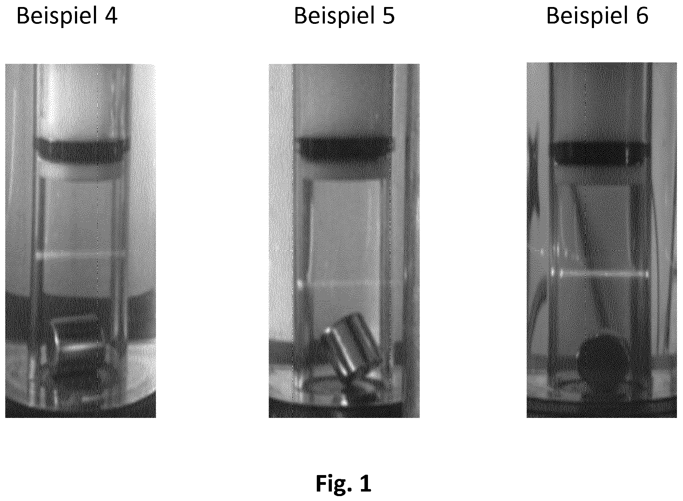

Das amphiphile Isocyanat aus dem Beispiel 1 wird bei 50°C und p=130 bar gemischt mit 10 Gew.-% CO₂ (bezogen auf das amphiphile Isocyanat). Es ergibt sich eine für das Auge einphasige Mischung, an der jedoch mit Hilfe der Lichtstreuung eines Laserstrahls nachgewiesen werden kann, dass es sich um eine Mikroemulsion handelt (durch die Struktur der Mischung wird das Licht gestreut und ein Laserstrahl ist in der Phase sichtbar, siehe Fig. 1)

### Beispiele 5 und 6:

Beispiel 4 wird mit den amphiphilen Isocyanaten aus den Beispielen 2 und 3 wiederholt mit jeweils dem gleichen Ergebnis (siehe Fig. 1)

## Patentansprüche

1. Polyurethan-, Polyisocyanurat- oder Polyharnstoffschaum, erhältlich aus der Reaktion einer Mischung umfassend:
A) eine gegenüber Isocyanaten reaktive Verbindung ("NCO-reaktive Verbindung");
B) ein Treibmittel ausgewählt aus der Gruppe umfassend lineare, verzweigte oder cyclische C1-bis C6-Kohlenwasserstoffe, lineare, verzweigte oder cyclische C1- bis C6-Fluorkohlenwasserstoffe, N₂, O₂, Argon und/oder CO₂, wobei das Treibmittel B) im überkritischen oder nahekritischen Zustand vorliegt;
C) ein Polyisocyanat;
D) ein amphiphiles Isocyanat; und
E) gegebenenfalls ein Tensid und
F) gegebenenfalls weitere Hilfs- und Zusatzstoffe.

2. Polyurethan-, Polyisocyanurat- oder Polyharnstoffschaum gemäß Anspruch 1 oder 2, wobei der HLB Wert des amphiphilen Isocyanats 1 bis 18 beträgt, berechnet wie in der Beschreibung angegeben.

3. Polyurethan-, Polyisocyanurat- oder Polyharnstoffschaum gemäß Anspruch 1 oder 2, wobei der HLB Wert des amphiphilen Isocyanats 2 bis 17 beträgt.

4. Polyurethan-, Polyisocyanurat- oder Polyharnstoffschaum gemäß Anspruch 1 oder 2, wobei der HLB Wert des amphiphilen Isocyanats 3 bis 16 beträgt.

5. Polyurethan-, Polyisocyanurat- oder Polyharnstoffschaum gemäß einem der Ansprüche 1 - 4, wobei der Anteil des amphiphilen Isocyanats 5 bis 70 Gew.-%, bezogen auf das Gewicht der Gesamtzusammensetzung, beträgt.

6. Polyurethan-, Polyisocyanurat- oder Polyharnstoffschaum gemäß einem der Ansprüche 1 - 5, wobei der hydrophobe Anteil des amphiphilen Isocyanats ein Rest eines Alkohols ausgewählt aus der Gruppe enthaltend einwertige oder mehrwertige Alkohole, welche eine gesättigte oder ungesättigte Kohlenwasserstoffkette mit mindestens 4 C-Atomen aufweisen, ist.

7. Polyurethan-, Polyisocyanurat- oder Polyharnstoffschaum gemäß einem der Ansprüche 1 - 5, wobei der hydrophile Anteil des amphiphilen Isocyanats ein Rest eines Alkohols ausgewählt aus der Gruppe enthaltend monofunktionelle oder mehrfunktionelle Polyalkylenoxide ist.

8. Polyurethan-, Polyisocyanurat- oder Polyharnstoffschaum gemäß einem der Ansprüche 1 - 7, wobei die Komponenten A) - F) in der Gesamtzusammensetzung in folgenden Gewichtsprozenten (Gew.-%) vorliegen:
A) 0 bis 60 Gew.%, bevorzugt 10 bis 60 Gew.-%,
B) 2 bis 40 Gew.-%,
C + D) 20 bis 70 Gew.-%, wobei das Verhältnis der Gewichtsprozente von C) : D) 0:100 bis 75:25, bevorzugt 1:99 bis 75:25 ist
E) 0 bis 20 Gew.-%,
F) 0 bis 10 Gew.-%,
wobei die Summe alle Anteile 100 Gew.-% ergibt.

9. Polyurethan-, Polyisocyanurat- oder Polyharnstoffschaum gemäß einem der Ansprüche 1 - 8, wobei die Komponente A) ausschließlich oder teilweise eine Komponente A2) enthält, welche einen hydrophoben Teil und einen hydrophilen Teil umfasst und eine durchschnittliche Hydroxyl-Funktionalität von mehr als 1 aufweist,
wobei der hydrophobe Teil eine gesättigte oder ungesättigte Kohlenwasserstoffkette mit mindestens 6 C-Atomen umfasst, und
wobei der hydrophile Teil Alkylenoxideinheiten und/oder Estereinheiten umfasst.

10. Polyurethan-, Polyisocyanurat- oder Polyharnstoffschaum gemäß einem der Ansprüche 1 - 9, wobei die Polyisocyanatkomponente C) monomeres und/oder polymeres Diphenylmethan-4,4'-diisocyanat umfasst.

11. Polyurethan-, Polyisocyanurat- oder Polyharnstoffschaum gemäß einem der Ansprüche 1 - 10 mit einer Rohdichte von ≥ 20 kg/m³ bis ≤ 160 kg/m³.

12. Verfahren zur Herstellung eines Polyurethan-, Polyisocyanurat- oder Polyharnstoffschaums gemäß einem der Ansprüche 1 - 11, umfassend die Schritte:
- Einbringen der Mischung umfassend die Komponenten A), B), C), D) und optional E) sowie
optional F) in eine geschlossene Form, wobei die geschlossene Form so eingerichtet ist, dass deren inneres Volumen und/oder der in ihrem Inneren herrschende Druck nach dem Einbringen der Mischung durch externe Beeinflussung verändert werden kann;
- Verweilen der Mischung umfassend die Komponenten A), B) C), D), und optional E) sowie
optional F) in der geschlossenen Form für eine vorbestimmte Zeitdauer von ≥ 0 Sekunden; und
- Vergrößern des inneren Volumens der geschlossenen Form und/oder Verringern des im Inneren der geschlossenen Form herrschenden Drucks durch externe Beeinflussung.

13. Verfahren zur Herstellung eines Polyurethan-, Polyisocyanurat- oder Polyharnstoffschaums gemäß einem der Ansprüche 1 - 11, umfassend die Schritte:
- Bereitstellung einer Mischung der Verbindungen A), B) C), D), und optional E) sowie optional F), wie sie in einem oder mehreren der Ansprüche 1 bis 10 beschrieben wird,unter erhöhtem Druck; und
- Austragen der Mischung, wobei beim Austragen der in der Mischung herrschende Druck auf Atmosphärendruck erniedrigt wird.

14. Verfahren gemäß Anspruch 12 oder 13, wobei die Komponente B) ganz oder teilweise im amphiphilen Isocyanat D) oder in einer Mischung der Isocyanatkomponenten C) und D) vorgelegt wird.

15. Verfahren gemäß Anspruch 14, wobei ein Teil der Komponente B) in der NCO-reaktiven Verbindung A) enthaltend eine Komponente A2) vorgelegt wird.

## Claims

1. Polyurethane, polyisocyanurate or polyurea foam obtainable from the reaction of a mixture comprising:
A) an isocyanate-reactive compound ("NCO-reactive compound");
B) a blowing agent selected from the group comprising linear, branched or cyclic C1- to C6-hydrocarbons, linear, branched or cyclic C1- to C6-(hydro) fluorocarbons, N2, O₂, argon and/or CO₂, wherein the blowing agent B) is in the supercritical or near-critical state;
C) a polyisocyanate;
D) an amphiphilic isocyanate; and
E) optionally a surfactant and
F) optionally further auxiliary/added substances.

2. Polyurethane, polyisocyanurate or polyurea foam according to either of Claims 1 and 2, wherein the amphiphilic isocyanate has an HLB value of 1 to 18 calculated as indicated in the description.

3. Polyurethane, polyisocyanurate or polyurea foam according to either of Claims 1 and 2, wherein the amphiphilic isocyanate has an HLB value of 2 to 17.

4. Polyurethane, polyisocyanurate or polyurea foam according to either of Claims 1 and 2, wherein the amphiphilic isocyanate has an HLB value of 3 to 16.

5. Polyurethane, polyisocyanurate or polyurea foam according to any of Claims 1 - 4, wherein the proportion of the amphiphilic isocyanate is 5 to 70 wt% based on the weight of the overall composition.

6. Polyurethane, polyisocyanurate or polyurea foam according to any of Claims 1 - 5, wherein the hydrophobic portion of the amphiphilic isocyanate is a radical of an alcohol selected from the group comprising monohydric or polyhdric alcohols having a saturated or unsaturated hydrocarbon chain having at least 4 carbon atoms.

7. Polyurethane, polyisocyanurate or polyurea foam according to any of Claims 1 - 5, wherein the hydrophilic portion of the amphiphilic isocyanate is a radical of an alcohol selected from the group comprising monofunctional or polyfunctional polyalkylene oxides.

8. Polyurethane, polyisocyanurate or polyurea foam according to any of Claims 1 - 7, wherein components A) - F) are present in the overall composition in the following weight percentages (wt%):
A) 0 to 60 wt%, preferably 10 to 60 wt%,
B) 2 to 40 wt%,
C + D) 20 to 70 wt%, wherein the ratio of the weight percentages of C) : D) is 0:100 to 75:25, preferably 1:99 to 75:25
E) 0 to 20 wt%,
F) 0 to 10 wt%,
wherein the sum of all proportions amounts to 100 wt%.

9. Polyurethane, polyisocyanurate or polyurea foam according to any of Claims 1 - 8, wherein some or all of component A) is component A2) which comprises a hydrophobic part and a hydrophilic part and has an average hydroxyl functionality of more than 1,
wherein the hydrophobic part comprises a saturated or unsaturated hydrocarbon chain having at least 6 carbon atoms and
wherein the hydrophilic part comprises alkylene oxide units and/or ester units.

10. Polyurethane, polyisocyanurate or polyurea foam according to any of Claims 1 - 9, wherein the polyisocyanate component C) comprises monomeric and/or polymeric diphenylmethane 4,4'-diisocyanate.

11. Polyurethane, polyisocyanurate or polyurea foam according to any of Claims 1 - 10 which has an apparent density of ≥ 20 kg/m³ to ≥ 160 kg/m³.

12. Process for producing a polyurethane, polyisocyanurate or polyurea foam according to any of Claims 1 - 11, comprising the steps of:
- introducing the mixture comprising the components A), B), C), D) and optionally E) and optionally F) into a closed mold, wherein the closed mold is set up such that its internal volume and/or the pressure prevailing in its interior can be changed by external agency after the mixture has been introduced;
- dwelling the mixture comprising components A), B) C), D), and optionally E) and optionally F) in the closed mold for a predetermined duration of ≥ 0 seconds; and
- increasing the inner volume of the closed mold and/or reducing the pressure prevailing in the interior of the closed mold by external agency.

13. Process for producing a polyurethane, polyisocyanurate or polyurea foam according to any of Claims 1 - 11, comprising the steps of:
providing a mixture of compounds A), B) C), D) and optionally E) and optionally F) as is described in one or more of Claims 1 to 10 under elevated pressure; and
discharging the mixture, wherein during discharging the pressure prevailing in the mixture is reduced to atmospheric pressure.

14. Process according to either of Claims 12 and 13, wherein some or all of component B) is provided in the amphiphilic isocyanate D) or in a mixture of isocyanate components C) and D).

15. Process according to Claim 14, wherein some of component B) is provided in the NCO-reactive compound A) comprising a component A2).

## Revendications

1. Mousse de polyuréthane, polyisocyanurate ou polyurée, pouvant être obtenue par la réaction d'un mélange comprenant :
A) un composé réactif avec les isocyanates (« composé réactif avec NCO ») ;
B) un agent gonflant choisi dans le groupe comprenant les hydrocarbures en C1 à C6 linéaires, ramifiés ou cycliques, les hydrocarbures fluorés en C1 à C6 linéaires, ramifiés ou cycliques, le N₂, l'O₂, l'argon et/ou le CO₂, l'agent gonflant B) se présentant à l'état supercritique ou presque critique ;
C) un polyisocyanate ;
D) un isocyanate amphiphile ; et
E) éventuellement un tensioactif ; et
F) éventuellement d'autres adjuvants et additifs.

2. Mousse de polyuréthane, de polyisocyanurate ou de polyurée selon la revendication 1 ou 2, dans laquelle la valeur HLB de l'isocyanate amphiphile est de 1 à 18, calculée tel qu'indiqué dans la description.

3. Mousse de polyuréthane, de polyisocyanurate ou de polyurée selon la revendication 1 ou 2, dans laquelle la valeur HLB de l'isocyanate amphiphile est de 2 à 17.

4. Mousse de polyuréthane, de polyisocyanurate ou de polyurée selon la revendication 1 ou 2, dans laquelle la valeur HLB de l'isocyanate amphiphile est de 3 à 16.

5. Mousse de polyuréthane, de polyisocyanurate ou de polyurée selon l'une quelconque des revendications 1 à 4, dans laquelle la proportion de l'isocyanate amphiphile est de 5 à 70 % en poids, par rapport au poids de la composition totale.

6. Mousse de polyuréthane, de polyisocyanurate ou de polyurée selon l'une quelconque des revendications 1 à 5, dans laquelle la fraction hydrophobe de l'isocyanate amphiphile est un radical d'un alcool choisi dans le groupe contenant les alcools monovalents ou polyvalents qui comprennent une chaîne hydrocarbonée saturée ou insaturée d'au moins 4 atomes C.

7. Mousse de polyuréthane, de polyisocyanurate ou de polyurée selon l'une quelconque des revendications 1 à 5, dans laquelle la fraction hydrophile de l'isocyanate amphiphile est un radical d'un alcool choisi dans le groupe contenant les polyoxydes d'alkylène monofonctionnels ou polyfonctionnels.

8. Mousse de polyuréthane, de polyisocyanurate ou de polyurée selon l'une quelconque des revendications 1 à 7, dans laquelle les composants A) à F) sont présents dans la composition totale en les pourcentages en poids (% en poids) suivants :
A) 0 à 60 % en poids, de préférence 10 à 60 % en poids,
B) 2 à 40 % en poids,
C+D) 20 à 70 % en poids, le rapport entre les pourcentages en poids de C) :D) étant de 0:100 à 75:25, de préférence de 1:99 à 75:25,
E) 0 à 20 % en poids,
F) 0 à 10 % en poids,
la somme de toutes les proportions étant de 100 % en poids.

9. Mousse de polyuréthane, de polyisocyanurate ou de polyurée selon l'une quelconque des revendications 1 à 8, dans laquelle le composant A) contient exclusivement ou partiellement un composant A2), qui comprend une partie hydrophobe et une partie hydrophile, et présente une fonctionnalité hydroxyle moyenne supérieure à 1,
la partie hydrophobe comprenant une chaîne hydrocarbonée saturée ou insaturée contenant au moins 6 atomes C, et
la partie hydrophile comprenant des unités oxyde d'alkylène et/ou des unités ester.

10. Mousse de polyuréthane, de polyisocyanurate ou de polyurée selon l'une quelconque des revendications 1 à 9, dans laquelle le composant polyisocyanate C) comprend du 4,4'-diisocyanate de diphénylméthane monomère et/ou polymère.

11. Mousse de polyuréthane, de polyisocyanurate ou de polyurée selon l'une quelconque des revendications 1 à 10, ayant une densité brute de ≥ 20 kg/m³ à ≤ 160 kg/m³.

12. Procédé de fabrication d'une mousse de polyuréthane, de polyisocyanurate ou de polyurée selon l'une quelconque des revendications 1 à 11, comprenant les étapes suivantes :
- l'introduction du mélange comprenant les composants A), B), C), D) et éventuellement E) et éventuellement F) dans un moule fermé, le moule fermé étant conçu de telle sorte que son volume intérieur et/ou la pression régnant dans son intérieur puissent être modifiés après l'introduction du mélange par une influence extérieure ;
- le séjour du mélange comprenant les composants A), B), C), D) et éventuellement E) et éventuellement F) dans le moule fermé pendant une durée prédéterminée ≥ 0 seconde ; et
- l'agrandissement du volume intérieur du moule fermé et/ou la réduction de la pression régnant à l'intérieur du moule fermé par une influence extérieure.

13. Procédé de fabrication d'une mousse de polyuréthane, de polyisocyanurate ou de polyurée selon l'une quelconque des revendications 1 à 11, comprenant les étapes suivantes :
- la préparation d'un mélange des composés A), B), C), D) et éventuellement E) et éventuellement F), tel que décrit dans une ou plusieurs des revendications 1 à 10, sous pression élevée ; et
- le déchargement du mélange, la pression régnant dans le mélange étant abaissée à la pression atmosphérique lors du déchargement.

14. Procédé selon la revendication 12 ou 13, dans lequel le composant B) est chargé en totalité ou en partie dans l'isocyanate amphiphile D) ou dans un mélange des composants isocyanate C) et D).

15. Procédé selon la revendication 14, dans lequel une partie du composant B) est chargé dans le composé A) réactif avec NCO contenant un composant A2).
